# EUROPEAN PATENT SPECIFICATION

(11) **EP 4 074 418 B1**
(45) Date of publication and mention of the grant of the patent: **21.05.2025**
(21) Application number: 20886178.1
(22) Date of filing: 28.10.2020
(51) Int. Cl.: H01M 4/86, H01M 4/90, H01M 8/10, B01J 23/42, H01M 4/92, H01M 8/1004

(54) **ELECTRODE CATALYST FOR FUEL CELL, ELECTRODE CATALYST LAYER FOR FUEL CELL, MEMBRANE/ELECTRODE ASSEMBLY, AND FUEL CELL**
ELEKTRODENKATALYSATOR FÜR BRENNSTOFFZELLE, ELEKTRODENKATALYSATORSCHICHT FÜR BRENNSTOFFZELLE, MEMBRAN-/ELEKTRODENANORDNUNG UND BRENNSTOFFZELLE
CATALYSEUR D'ÉLECTRODE POUR PILE À COMBUSTIBLE, COUCHE DE CATALYSEUR D'ÉLECTRODE POUR PILE À COMBUSTIBLE, ENSEMBLE ÉLECTRODE/MEMBRANE, ET PILE À COMBUSTIBLE

(30) Priority: 12.12.2019 JP 2019224819; 07.10.2020 JP 2020169841
(43) Date of publication of application: 19.10.2022
(73) Proprietor: Panasonic Intellectual Property Management Co., Ltd., Osaka-shi, Osaka 540-6207 (JP)
(72) Inventor: MIYATA, Nobuhiro, Osaka 540-6207 (JP); SHINTANI, Haruhiko, Osaka 540-6207 (JP); WADA, Tomokatsu, Osaka 540-6207 (JP)
(74) Representative: Grünecker Patent- und Rechtsanwälte PartG mbB
(86) International application number: PCT/JP2020/040475
(87) International publication number: WO 2021/117369

(56) References cited:
- WO-A1-2014/167981
- WO-A1-2019/097631
- JP-A- 2016 032 802
- JP-A- 2017 208 224
- JP-A- 2018 181 838
- JP-A- 2019 083 189
- JP-A- 2019 172 476
- US-A1- 2016 064 744
- US-A1- 2016 079 605
- US-A1- 2016 087 281
- US-A1- 2018 301 726

## Description

### Technical Field

The present disclosure relates to an electrode catalyst for a fuel battery, an electrode catalyst layer of a fuel battery, a membrane-electrode assembly, and a fuel battery.

### Background Art

A solid polymer fuel battery including a proton-conductive solid polymer membrane includes a membrane-electrode assembly for subjecting hydrogencontaining fuel gas and oxygen-containing oxidant gas to an electrochemical reaction (a power generation reaction).

In general, an electrode catalyst layer constituting the membrane-electrode assembly is formed by applying a catalyst paste to a polymer electrolyte membrane or another such base material and thereafter performing drying. This catalyst paste is formed by dispersing a catalyst and a polymer electrolyte having proton conductivity (hereafter referred to as an "ionomer") in a solvent such as water or an alcohol. In the catalyst, a catalyst metal such as platinum is supported on a conductive material such as carbon black. For example, according to PTL 1 to 5, catalyst metal particles are supported in a carrier formed of mesoporous carbon.

### Citation List

### Patent Literature

PTL 1: JP 6150936 B2
PTL 2: JP 5998275 B2
PTL 3: JP 5998277 B2
PTL 4: US 2018/301726 A1
PTL 5: US 2016/087281 A1

### Summary of Invention

### Technical Problem

However, in the related art (PTL 1 to 5), room for improvement still exists in terms of reducing the deterioration of the catalyst activity.

The present disclosure has been made in light of the problem described above and has an object to provide an electrode catalyst for a fuel battery, an electrode catalyst layer of a fuel battery, a membrane-electrode assembly, and a fuel battery that are capable of reducing the deterioration of the catalyst activity to a greater extent than in the related art.

### Solution to Problem

To resolve the problem described above, one aspect of an electrode catalyst for a fuel battery according to the present disclosure includes a mesoporous material and catalyst metal particles supported at least in the mesoporous material. In the electrode catalyst for a fuel battery, before supporting the catalyst metal particles, the mesoporous material has mesopores having a mode radius of greater than or equal to 1 nm and less than or equal to 25 nm, the mode radius of the mesopores being determined by measuring the nitrogen adsorption isotherm using a physical adsorption apparatus, calculating the log differential pore size distribution according to a BJH method, and determining the peak maximum value of the log differential pore size distribution as the mode radius; and has a value of greater than 0.90, the value being determined by dividing a specific surface area S₁₋₂₅ (m²/g) of the mesopores obtained by analyzing a nitrogen adsorption-desorption isotherm according to a BJH method, the mesopores having a radius of greater than or equal to 1 nm and less than or equal to 25 nm, by a BET specific surface area (m²/g) evaluated according to a BET method.

To resolve the problem described above, one aspect of an electrode catalyst layer of a fuel battery according to the present disclosure includes the electrode catalyst for a fuel battery and an ionomer. The electrode catalyst for a fuel battery includes a mesoporous material and catalyst metal particles supported at least in the mesoporous material. In the electrode catalyst for a fuel battery, before supporting the catalyst metal particles, the mesoporous material has mesopores having a mode radius of greater than or equal to 1 nm and less than or equal to 25 nm, the mode radius of the mesopores being determined by measuring the nitrogen adsorption isotherm using a physical adsorption apparatus, calculating the log differential pore size distribution according to a BJH method, and determining the peak maximum value of the log differential pore size distribution as the mode radius; and has a value of greater than 0.90, the value being determined by dividing a specific surface area S₁₋₂₅ (m²/g) of the mesopores obtained by analyzing a nitrogen adsorption-desorption isotherm according to a BJH method, the mesopores having a radius of greater than or equal to 1 nm and less than or equal to 25 nm, by a BET specific surface area (m²/g) evaluated according to a

### BET method.

To resolve the problem described above, one aspect of a membrane-electrode assembly according to the present disclosure includes a polymer electrolyte membrane; and a fuel electrode and an air electrode respectively disposed on both main surfaces of the polymer electrolyte membrane, the fuel electrode and the air electrode each including an electrode catalyst layer and a gas diffusion layer. In the membrane-electrode assembly, at least the electrode catalyst layer of the air electrode includes the electrode catalyst layer of a fuel battery including the electrode catalyst for a fuel battery and an ionomer. The electrode catalyst for a fuel battery includes a mesoporous material and catalyst metal particles supported at least in the mesoporous material. In the electrode catalyst for a fuel battery, before supporting the catalyst metal particles, the mesoporous material has mesopores having a mode radius of greater than or equal to 1 nm and less than or equal to 25 nm; the mode radius of the mesopores being determined by measuring the nitrogen adsorption isotherm using a physical adsorption apparatus, calculating the log differential pore size distribution according to a BJH method, and determining the peak maximum value of the log differential pore size distribution as the mode radius; and has a value of greater than 0.90, the value being determined by dividing a specific surface area S₁₋₂₅ (m²/g) of the mesopores obtained by analyzing a nitrogen adsorption-desorption isotherm according to a BJH method, the mesopores having a radius of greater than or equal to 1 nm and less than or equal to 25 nm, by a BET specific surface area (m²/g) evaluated according to a BET method.

To resolve the problem described above, one aspect of a fuel battery according to the present disclosure includes the membrane-electrode assembly including a polymer electrolyte membrane; and a fuel electrode and an air electrode respectively disposed on both main surfaces of the polymer electrolyte membrane, the fuel electrode and the air electrode each including an electrode catalyst layer and a gas diffusion layer. In the membrane-electrode assembly, at least the electrode catalyst layer of the air electrode includes the electrode catalyst layer of a fuel battery including the electrode catalyst for a fuel battery and an ionomer. The electrode catalyst for a fuel battery includes a mesoporous material and catalyst metal particles supported at least in the mesoporous material. In the electrode catalyst for a fuel battery, before supporting the catalyst metal particles, the mesoporous material has mesopores having a mode radius of greater than or equal to 1 nm and less than or equal to 25 nm, the mode radius of the mesopores being determined by measuring the nitrogen adsorption isotherm using a physical adsorption apparatus, calculating the log differential pore size distribution according to a BJH method, and determining the peak maximum value of the log differential pore size distribution as the mode radius; and has a value of greater than 0.90, the value being determined by dividing a specific surface area S₁₋₂₅ (m²/g) of the mesopores obtained by analyzing a nitrogen adsorption-desorption isotherm according to a BJH method, the mesopores having a radius of greater than or equal to 1 nm and less than or equal to 25 nm, by a BET specific surface area (m²/g) evaluated according to a BET method.

### Advantageous Effects of Invention

The present disclosure has an effect where the electrode catalyst for a fuel battery, the electrode catalyst layer of a fuel battery, the membrane-electrode assembly, and the fuel battery are capable of reducing the deterioration of the catalyst activity to a greater extent than in the related art.

### Brief Description of Drawings

[Fig. 1] Fig. 1 is a view schematically illustrating an example of an electrode catalyst for a fuel battery according to a first embodiment.
[Fig. 2] Fig. 2A is a view schematically illustrating an example of an electrode catalyst layer of a fuel battery according to a second embodiment. Fig. 2B is an enlarged view of a portion of Fig. 2A.
[Fig. 3] Fig. 3 is a view schematically illustrating a portion of an example of an electrode catalyst layer of a fuel battery according to Modification 4 of the second embodiment.
[Fig. 4] Fig. 4 is a sectional view schematically illustrating an example of a membrane-electrode assembly according to a third embodiment.
[Fig. 5] Fig. 5 is a sectional view schematically illustrating an example of a fuel battery according to a fourth embodiment.
[Fig. 6] Fig. 6 is a table illustrating the catalyst activity of fuel batteries respectively including the electrode catalyst of Example 1, Example 2, Comparative Example 1, and Comparative Example 2.
[Fig. 7] Fig. 7 is a graph illustrating the relationship between the pore surface area ratio of mesoporous carbon and the catalyst activity of the fuel batteries in the cases of the fuel batteries respectively including the electrode catalyst of Example 1, Example 2, Comparative Example 1, and Comparative Example 2.

### Description of Embodiments

### (Underlying Knowledge Forming Basis of One Aspect of Present Disclosure)

The present inventors have repeatedly conducted intensive studies on the deterioration of the catalyst activity in the existing techniques disclosed in PTL 1 to 3. As a result, the inventors have focused on the fact that the ratio of the surface area of mesopores to the whole surface area of a mesoporous carbon carrier contributes to the deterioration of the catalyst activity of catalyst metal particles that is caused by an ionomer. Thus, the inventors have found that the deterioration of the catalyst activity is reduced by, before a mesoporous material supports catalyst metal particles, making the mesoporous material have a value of greater than 0.90, the value being determined by dividing a specific surface area S₁₋₂₅ (m²/g) of mesopores obtained by analysis according to a BJH method, the mesopores having a radius of greater than or equal to 1 nm and less than or equal to 25 nm, by a BET specific surface area (m²/g) evaluated according to a BET method. The present disclosure has been made based on this knowledge. Accordingly, the present disclosure specifically provides the aspects described below.

An electrode catalyst for a fuel battery according to a first aspect of the present disclosure includes a mesoporous material and catalyst metal particles supported at least in the mesoporous material, where, before supporting the catalyst metal particles, the mesoporous material has mesopores having a mode radius of greater than or equal to 1 nm and less than or equal to 25 nm, the mode radius of the mesopores being determined by measuring the nitrogen adsorption isotherm using a physical adsorption apparatus, calculating the log differential pore size distribution according to a BJH method, and determining the peak maximum value of the log differential pore size distribution as the mode radius; and may have a value of greater than 0.90, the value being determined by dividing a specific surface area S₁₋₂₅ (m²/g) of the mesopores obtained by analyzing a nitrogen adsorption-desorption isotherm according to a BJH method, the mesopores having a radius of greater than or equal to 1 nm and less than or equal to 25 nm, by a BET specific surface area (m²/g) evaluated according to a BET method.

According to this structure, many catalyst metal particles can be supported in the mesopores of the mesoporous material. Furthermore, for example, even when an ionomer is in contact with the electrode catalyst, because the ionomer is less likely to enter the mesopores, the surface area of the catalyst metal particles covered with the ionomer can be reduced. Thus, the deterioration of the catalyst activity of the electrode catalyst due to the covering of the catalyst metal particles with the ionomer can be reduced.

**In** an electrode catalyst for a fuel battery according to a second aspect of the present disclosure, in the first aspect, the mesopores of the mesoporous material may have a mode radius of greater than 1.65 nm.

According to this structure, aggregation even under severe conditions during the operation of a fuel battery is prevented or reduced to a greater extent in the case of the mesoporous material in which the mesopores have a mode radius of greater than 1.65 nm than in the case of a mesoporous material in which the mesopores have a mode radius of less than or equal to 1.65 nm. Thus, the decrease in the specific surface area of the mesoporous material and that of the catalyst metal particles supported in the mesoporous material due to aggregation is reduced, and accordingly, the deterioration of the catalyst activity of the electrode catalyst can be reduced.

In an electrode catalyst for a fuel battery according to a third aspect of the present disclosure, in the first or the second aspect, the BET specific surface area of the mesoporous material may be greater than or equal to 1500 (m²/g). Aggregation of the catalyst metal particles supported in the mesoporous material is reduced to a greater extent in the case of the mesoporous material having a BET specific surface area of greater than or equal to 1500 (m²/g) than in the case of a mesoporous material having a BET specific surface area of less than 1500 (m²/g). Thus, the decrease in the specific surface area of the catalyst metal particles due to aggregation is reduced, and accordingly, the deterioration of the catalyst activity of the electrode catalyst can be reduced.

In an electrode catalyst for a fuel battery according to a fourth aspect of the present disclosure, in any one of the first to the third aspects, the ratio of the number of catalyst metal particles supported in the mesopores to the total number of the catalyst metal particles supported in the mesoporous material may be greater than or equal to 0.90. According to this structure, for example, even when an ionomer is in contact with the electrode catalyst, the deterioration of the catalyst activity of the electrode catalyst due to the covering of the catalyst metal particles with the ionomer can be reduced.

An electrode catalyst layer of a fuel battery according to a fifth aspect of the present disclosure may include at least the electrode catalyst for a fuel battery according to any one of the first to the fourth aspects and at least an ionomer. According to this structure, because the deterioration of the catalyst activity of the electrode catalyst due to the covering of the catalyst metal particles with the ionomer is reduced, the deterioration of the catalyst activity of the electrode catalyst layer due to the ionomer can be prevented or reduced.

An electrode catalyst layer of a fuel battery according to a sixth aspect of the present disclosure, in the fifth aspect, may include at least one of carbon black or carbon nanotubes. According to this structure, due to the carbon black and/or the carbon nanotubes, the drainage properties of the electrode catalyst layer is enhanced, and the deterioration of the catalyst activity of and the gas diffusivity in the electrode catalyst layer due to water can be reduced. Furthermore, due to the carbon black and/or the carbon nanotubes, the electrical resistance between the mesoporous material particles can be reduced.

A membrane-electrode assembly according to a seventh aspect of the present disclosure may include a polymer electrolyte membrane; and a fuel electrode and an air electrode respectively disposed on both main surfaces of the polymer electrolyte membrane, the fuel electrode and the air electrode each including an electrode catalyst layer and a gas diffusion layer, where at least the electrode catalyst layer of the air electrode may include the electrode catalyst layer of a fuel battery according to the fifth or the sixth aspect. According to this structure, because the deterioration of the catalyst activity of the electrode catalyst layer is reduced, the deterioration of the catalyst activity of the membrane-electrode assembly can be reduced.

A fuel battery according to an eighth aspect of the present disclosure may include the membrane-electrode assembly according to the seventh aspect. According to this structure, because the deterioration of the catalyst activity of the membrane-electrode assembly is reduced, the deterioration of the catalyst activity of the fuel battery can be reduced.

Hereafter, embodiments of the present disclosure will be described with reference to the drawings. Hereafter, throughout all the drawings, the same reference signs are assigned to the same or corresponding constituent members, and the description thereof may be omitted.

### [Embodiments]

### (First Embodiment)

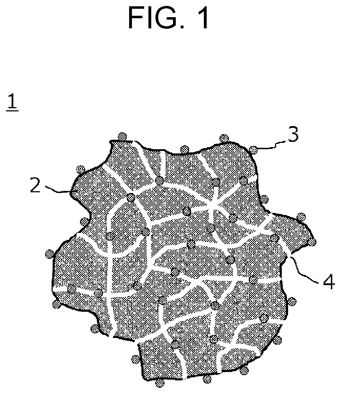

As illustrated in Fig. 1, an electrode catalyst 1 for a fuel battery according to a first embodiment includes a mesoporous material 2 and catalyst metal particles 3 supported at least in the mesoporous material 2.

The mesoporous material 2 is formed of a porous material having many mesopores 4 and is a carrier in which the catalyst metal particles 3 are supported. The mesoporous material 2 has, for example a particle shape, but is not limited thereto. The average particle diameter of the mesoporous material 2 is, for example, greater than or equal to 200 nm. The average particle diameter is the median diameter (D50) of the particle size distribution of the mesoporous material 2. Furthermore, examples of the mesoporous material 2 include mesoporous carbon and oxides of, for example, titanium, tin, niobium, tantalum, zirconium, aluminum, and silicon (silicon).

The mesopores 4 are pores formed in the mesoporous material 2, open at the outer surface of the mesoporous material 2, and extend from the opening into the mesoporous material 2. Some of a plurality of the mesopores 4 or all the mesopores 4 may penetrate through the mesoporous material 2. Before the mesoporous material 2 supports the catalyst metal particles 3, the mesopores 4 have a mode radius of greater than or equal to 1 nm and less than or equal to 25 nm. The mode radius refers to the most frequent diameter in a diameter distribution of the mesopores 4 of the mesoporous material 2 (the radius corresponding to a maximum value). The radius of the mesopore 4 is half the dimension thereof in the direction perpendicular to the direction in which the mesopore 4 extends.

The mode radius of the mesopores 4 may be greater than or equal to 3 nm and less than or equal to 6 nm, and furthermore, may be greater than or equal to 3 nm and less than or equal to 4 nm. When the mode radius of the mesopores 4 is greater than or equal to 3 nm, gas is likely to pass through the mesopores 4. When the mode radius is less than or equal to 4 nm, for example, even in the case where an ionomer is in contact with the electrode catalyst 1, the ionomer is less likely to enter the mesopores 4.

The pore volume of the mesopores 4 may be greater than or equal to 1.0 cm³/g and less than or equal to 3.0 cm³/g. When the pore volume of the mesopores 4 is greater than or equal to 1.0 cm³/g, many catalyst metal particles 3 can be supported in the mesoporous material 2 (i.e., the mesopores 4). When the pore volume is less than or equal to 3.0 cm³/g, the mesoporous material 2 is capable of having high strength as a structural body.

The pore volume and the mode radius of the mesopores 4 are determined by analyzing nitrogen adsorption-desorption isotherm measurement data according to a method such as a BJH method, a Non-Localized Density Functional Theory (NLDFT) method, or a Quenched Solid Density Functional Theory (QSDFT) method.

Before supporting the catalyst metal particles 3, the mesoporous material 2 has a pore surface area ratio of greater than 0.90. The pore surface area ratio (S₁₋₂₅/Sa) is a value determined by dividing a specific surface area S₁₋₂₅ (m²/g) of the mesopores 4, the mesopores 4 having a radius of greater than or equal to 1 nm and less than or equal to 25 nm, by a BET specific surface area Sa (m²/g) evaluated according to a BET method.

The specific surface area S₁₋₂₅ of the mesopores 4 is obtained by analyzing a nitrogen adsorption-desorption isotherm of the mesoporous material 2 according to a Barrett-Joyner-Halenda (BJH) method. This nitrogen adsorption-desorption isotherm is measured by causing the mesoporous material 2 to adsorb nitrogen at a predetermined temperature such as a liquid nitrogen temperature. The specific surface area S₁₋₂₅ is the inner surface area per unit weight of the mesoporous material 2, and the inner surface of the mesoporous material 2 is a surface of the mesoporous material 2 defining the mesopores 4, the mesopores 4 having a radius of greater than or equal to 1 nm and less than or equal to 25 nm.

The BET specific surface area Sa is obtained by evaluating the mesoporous material 2 according to a Brunauer-Emmett-Teller (BET) method and is the whole surface (inner surface and outer surface) area per unit weight of the mesoporous material 2. For example, according to the BET method, the surface area of the mesoporous material 2 is determined by applying a BET equation to a region of a nitrogen adsorption-desorption isotherm, the region being a region of a relative pressure of greater than or equal to 0.05 and less than or equal to 0.35. The outer surface of the mesoporous material 2 is, of the whole surface of the mesoporous material 2, a surface other than the inner surface.

The production method for the mesoporous material 2 is not particularly limited, but, for example, a method disclosed in PTL 3 can be suitably used. The mesoporous material 2 produced according to the method has mesopores 4 having a large pore volume and a structure in which the mesopores 4 are in communication with one another. Thus, the mesoporous material 2 easily supports the catalyst metal particles 3 in the mesopores 4, and gas is likely to be supplied to the catalyst metal particles 3 supported in the mesoporous material 2.

The average particle diameter of the mesoporous material 2 may be adjusted by pulverization treatment. In the pulverization treatment, for example, a pulverization method such as a wet bead mill, a dry bead mill, a wet ball mill, a dry ball mill, a wet jet mill, or a dry jet mill is used. Among these, according to pulverization treatment using a wet bead mill, the mesoporous material 2 is likely to be pulverized to a small particle diameter.

The catalyst metal particles 3 are supported at least in the mesoporous material 2. That is, the catalyst metal particles 3 are supported at the inner surface of the mesoporous material 2, in the mesopores 4. The catalyst metal particles 3 may be supported or unsupported at the outer surface of the mesoporous material 2.

The catalyst metal particles 3 are formed of, for example, platinum (Pt), ruthenium (Ru), palladium (Pd), iridium (Ir), silver (Ag), or gold (Au). The platinum and alloys thereof have a high catalyst activity for an oxidation-reduction reaction and good durability in a power generation environment of a fuel battery, and are thus appropriate as the electrode catalyst 1 for a fuel battery.

The average particle diameter of the catalyst metal particles 3 is, for example, greater than or equal to 1 nm and less than or equal to 20 nm, and furthermore, may be greater than or equal to 1 nm and less than or equal to 10 nm. When the average particle diameter of the catalyst metal particles 3 is less than or equal to 10 nm, the surface area per unit weight (specific surface area) of the catalyst metal particles 3 is large, and thus the catalyst activity of the catalyst metal particles 3 is high. When the average particle diameter of the catalyst metal particles 3 is greater than or equal to 1 nm, the catalyst metal particles 3 are chemically stabilized, and, for example, are less likely to melt even in a power generation environment of a fuel battery.

The weight ratio of the catalyst metal particles 3 to the weight of the mesoporous material 2 may be greater than or equal to 0.65 and less than or equal to 1.5. When the weight ratio is greater than or equal to 0.65, the amount of a catalyst metal required for a fuel battery can be obtained without increasing the thickness of an electrode catalyst layer including the electrode catalyst 1. When the weight ratio is less than or equal to 1.5, the amount of the catalyst metal particles 3 per unit area of the mesoporous material 2 is not excessively large, and thus the catalyst metal particles 3 are less likely to aggregate and are likely to be diffused to the surface of the mesoporous material 2.

As in this structure, before supporting the catalyst metal particles 3, the mesoporous material 2 has the mesopores 4 having a mode radius of greater than or equal to 1 nm and less than or equal to 25 nm and has a value of greater than 0.90, the value being determined by dividing a specific surface area S₁₋₂₅ (m²/g) of the mesopores 4 obtained by analyzing a nitrogen adsorption-desorption isotherm according to a BJH method, the mesopores 4 having a radius of greater than or equal to 1 nm and less than or equal to 25 nm, by a BET specific surface area (m²/g) evaluated according to a BET method.

In the case of the electrode catalyst 1 in which the mesoporous material 2 has a pore surface area ratio (S₁₋₂₅/Sa) of greater than 0.90, more catalyst metal particles 3 can be supported at the inner surface of the mesoporous material 2, in the mesopores 4, than in the case of an electrode catalyst in which the mesoporous material 2 has a pore surface area ratio of less than or equal to 0.90. Furthermore, for example, even when an ionomer is in contact with the electrode catalyst 1, because the ionomer is less likely to enter the mesopores 4, the specific surface of the catalyst metal particles 3 covered with the ionomer can be reduced. Thus, the deterioration of the catalyst activity of the electrode catalyst 1 due to the covering of the catalyst metal particles 3 with the ionomer can be reduced.

### <Modification 1>

In an electrode catalyst 1 for a fuel battery according to Modification 1, in the first embodiment, the mesopores 4 of the mesoporous material 2 may have a mode radius of greater than 1.65 nm. In this case, the mode radius of the mesopores 4 is less than or equal to 25 nm, and may be less than or equal to 6 nm, and less than or equal to 4 nm.

The mesoporous material 2 in which the mesopores 4 have a mode radius of greater than 1.65 nm is less likely to aggregate even under severe conditions during the operation of a fuel battery than a mesoporous material in which the mesopores 4 have a mode radius of less than or equal to 1.65 nm. Thus, the decrease in the specific surface area of the mesoporous material 2 and that of the catalyst metal particles 3 supported in the mesoporous material 2 due to aggregation is reduced, and accordingly, the deterioration of the catalyst activity of the electrode catalyst 1 can be reduced.

Even when the catalyst metal particles 3 having a particle diameter of greater than or equal to 1 nm are supported at the inner surface of the mesoporous material 2, in the mesopores 4, the mesopores 4 are less likely to be blocked by the catalyst metal particles 3. Thus, for example, even when water is produced during a power generation reaction of a fuel battery, the water is drained through the gap between the catalyst metal particles 3 and the inner circumferential surface of the mesoporous material 2. Thus, the deterioration of the catalyst activity that is caused by the decrease in the specific surface area of the catalyst metal particles 3 due to water can be reduced. Furthermore, because gas is supplied through the mesopores 4 to the catalyst metal particles 3, the deterioration of the power generation performance of the fuel battery can be prevented or reduced.

### <Modification 2>

In an electrode catalyst 1 for a fuel battery according to Modification 2, in the first embodiment and Modification 1, the BET specific surface area of the mesoporous material 2 may be greater than or equal to 1500 (m²/g).

Aggregation of the catalyst metal particles 3 supported in the mesoporous material 2 is reduced to a greater extent in the case of the mesoporous material 2 having a BET specific surface area of greater than or equal to 1500 (m²/g) than in the case of a mesoporous material 2 having a BET specific surface area of less than 1500 (m²/g). Thus, the decrease in the specific surface area of the catalyst metal particles 3 due to aggregation is reduced, and accordingly, the deterioration of the catalyst activity of the electrode catalyst 1 can be reduced.

### <Modification 3>

In an electrode catalyst 1 for a fuel battery according to Modification 3, in the first embodiment and Modifications 1 and 2, among the catalyst metal particles 3 supported in the mesoporous material 2, the number ratio of catalyst metal particles 3 supported in the mesopores 4 may be greater than or equal to 0.90.

Thus, an Na number of the catalyst metal particles 3 are supported at the surface of the mesoporous material 2, and of this surface, an No number of the catalyst metal particles 3 are supported at the outer surface and an Ni number of the catalyst metal particles 3 are supported at the inner surface. The ratio of the number of the catalyst metal particles 3 supported at the outer surface to the number of the catalyst metal particles 3 supported at the whole surface (No/Na) is less than 0.10, and the ratio of the number of the catalyst metal particles 3 supported at the inner surface to the number of the catalyst metal particles 3 supported at the whole surface (Ni/Na) is greater than or equal to 0.90. Thus, in the case of the electrode catalyst 1 having an Ni/Na of greater than or equal to 0.90, for example, when an ionomer is in contact with the electrode catalyst 1, the specific surface area of the catalyst metal particles 3 covered with the ionomer can be kept smaller than in the case of an electrode catalyst 1 having an Ni/Na of less than 0.90. Thus, the decrease in the specific surface area of the catalyst metal particles 3 due to the ionomer is reduced, and accordingly, the deterioration of the catalyst activity of the electrode catalyst 1 can be reduced.

### (Second Embodiment)

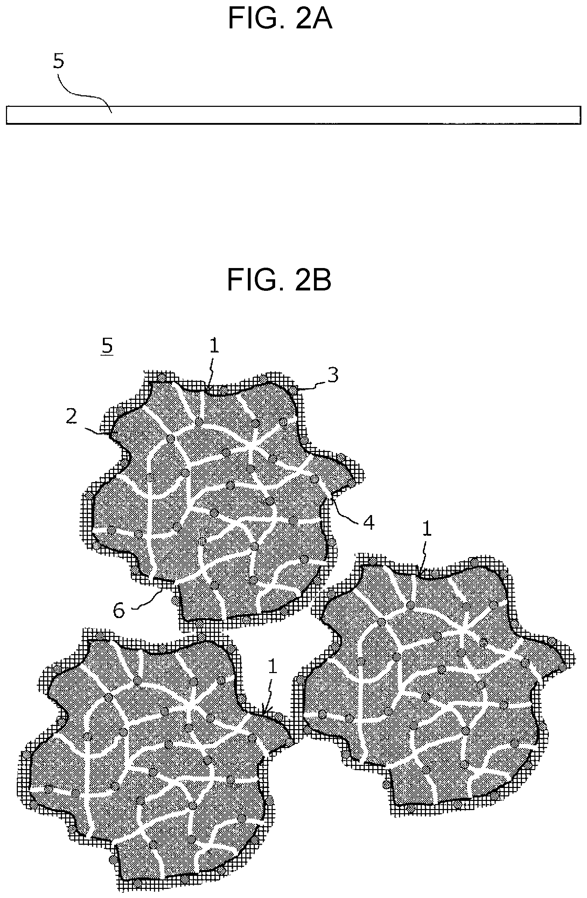

As illustrated in Figs. 2A and 2B, an electrode catalyst layer 5 of a fuel battery according to a second embodiment includes the electrode catalyst 1 and an ionomer 6. The electrode catalyst 1 is at least one of the electrode catalysts for a fuel battery according to the first embodiment or Modifications 1 to 3 thereof. The electrode catalyst layer 5 is, for example, a thin film and may have a flat shape having a small thickness.

The ionomer 6 is a polymer electrolyte covering the outer surface of the electrode catalyst 1 and having proton conductivity and is formed of, for example, an ion exchange resin. Among ion exchange resins, a perfluorosulfonic acid resin has high proton conductivity and is stably present even in a power generation environment of a fuel battery, and thus it is suitably used as the ionomer 6 of the electrode catalyst layer 5 of a fuel battery. For example, when the electrode catalyst layer 5 is used for a fuel battery, the fuel battery is capable of obtaining high power generation performance due to the proton conductivity of the ionomer 6.

The ion exchange capacity of an ion exchange resin may be greater than or equal to 0.9 milliequivalent/g of dry resin and less than or equal to 2.0 milliequivalent/g of dry resin. When the ion exchange capacity is greater than or equal to 0.9 milliequivalent/g of dry resin, the ionomer 6 is likely to obtain high proton conductivity. When the ion exchange capacity is less than or equal to 2.0 milliequivalent/g of dry resin, the swelling of the resin due to water content is prevented or reduced, and the gas diffusivity in the electrode catalyst layer 5 is less likely to be inhibited.

In the electrode catalyst 1, before supporting the catalyst metal particles 3, the mesoporous material 2 has a pore surface area ratio of greater than 0.90. Thus, the decrease in the specific surface area of the catalyst metal particles 3 due to the ionomer 6 is reduced, and accordingly, the deterioration of the catalyst activity of the electrode catalyst layer 5 due to the ionomer 6 can be prevented or reduced.

The electrode catalyst layer 5 is produced according to a production method commonly used for fuel batteries. For example, the catalyst metal particles 3 are supported in the mesoporous material 2 to thereby form the electrode catalyst 1 for a fuel battery. This electrode catalyst 1 and the ionomer 6 are dispersed in a solvent containing water and/or an alcohol. This dispersion is applied to the base materials such as a polymer electrolyte membrane, gas diffusion layers, and various transfer films and thereafter dried to thereby form the electrode catalyst layer 5.

### <Modification 4>

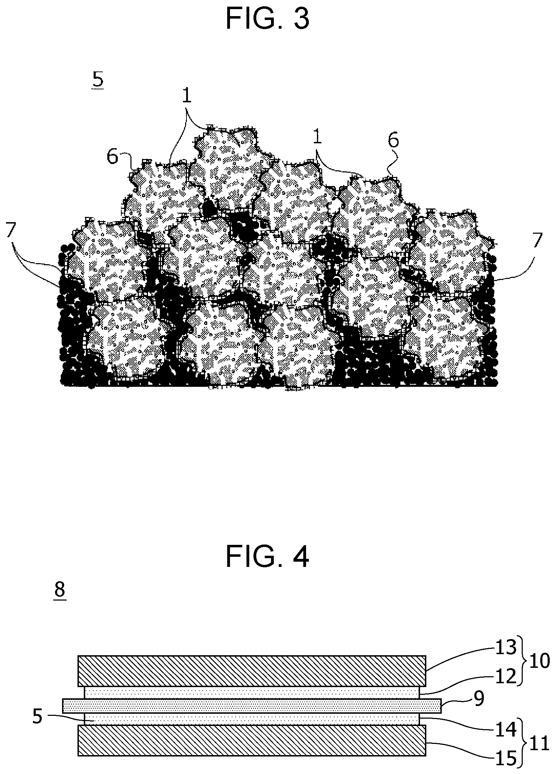

As illustrated in Fig. 3, the electrode catalyst layer 5 of a fuel battery according to Modification 4 may further include at least one carbon material 7 of carbon black or carbon nanotubes in addition to the structure according to the second embodiment.

Examples of the carbon black include Ketjen black, acetylene black, Vulcan, and Black Pearls. Among these, Ketjen black is capable of forming an effective drainage path in the electrode catalyst layer 5 even with a small amount added, because an aggregate of Ketjen black is linearly developed. Examples of the carbon nanotubes include single-layer carbon nanotubes and multilayer carbon nanotubes.

The average particle diameter of the carbon material 7 is smaller than the average particle diameter of the mesoporous material 2, and is, for example, greater than or equal to 10 nm and less than or equal to 100 nm. The carbon material 7 is disposed between the mesoporous material particles 2 adjacent to one another and fills the gap between them.

Thus, because the carbon material 7 which are carbon black and/or carbon nanotubes causes a capillary phenomenon, it prevents the stagnation of water in the gap between the mesoporous material 2 particles. As a result, the drainage properties of the electrode catalyst layer 5 are enhanced, and accordingly, the efficiency of a power generation reaction of a fuel battery can be enhanced. Furthermore, because the carbon material 7 has conductivity, it aids the conductivity between the mesoporous material 2 particles. As a result, the resistance of the electrode catalyst layer 5 is reduced, and accordingly, the efficiency of the power generation reaction of the fuel battery can be enhanced.

### (Third Embodiment)

As illustrated in Fig. 4, a membrane-electrode assembly 8 according to a third embodiment includes a polymer electrolyte membrane 9; and a fuel electrode 10 and an air electrode 11. The fuel electrode 10 and the air electrode 11 are respectively disposed on both main surfaces of the polymer electrolyte membrane 9, the fuel electrode 10 and the air electrode 11 each including an electrode catalyst layer and a gas diffusion layer. At least the electrode catalyst layer of the air electrode 11 includes the electrode catalyst layer 5 of a fuel battery according to the second embodiment or Modification 4 thereof.

The polymer electrolyte membrane 9 combines proton conductivity and gas barrier properties, and examples thereof include ion exchange fluororesin membranes or ion exchange hydrocarbon resin membranes. Among these, a perfluorosulfonic acid resin membrane has high proton conductivity and is capable of being stably present, for example, even in a power generation environment of a fuel battery, and thus it is preferable as the polymer electrolyte membrane 9.

The polymer electrolyte membrane 9 is interposed between the fuel electrode 10 and the air electrode 11, and enables the ionic (proton) conduction between them. The ion exchange capacity of the polymer electrolyte membrane 9 is greater than or equal to 0.9 milliequivalent/g of dry resin and less than or equal to 2.0 milliequivalent/g of dry resin. When the ion exchange capacity is greater than or equal to 0.9 milliequivalent/g of dry resin, the polymer electrolyte membrane 9 is likely to obtain high proton conductivity. When the ion exchange capacity is less than or equal to 2.0 milliequivalent/g of dry resin, in the polymer electrolyte membrane 9, the swelling of the resin due to water content is prevented or reduced, and accordingly, the dimensional change of the polymer electrolyte membrane 9 is prevented or reduced.

The electrode catalyst layer 5 includes a pair of surfaces (main surfaces), and the dimension between them (film thickness) is, for example, greater than or equal to 5 µm and less than or equal to 50 µm. When the film thickness is greater than or equal to 5 µm, the polymer electrolyte membrane 9 is capable of obtaining high gas barrier properties. When the film thickness is less than or equal to 50 µm, the polymer electrolyte membrane 9 is capable of obtaining high proton conductivity.

The fuel electrode 10 is disposed on a first main surface of the pair of the main surfaces of the polymer electrolyte membrane 9 and the air electrode 11 is disposed on a second main surface of the pair of the main surfaces of the polymer electrolyte membrane 9. The fuel electrode 10 and the air electrode 11 have the polymer electrolyte membrane 9 interposed therebetween.

The fuel electrode 10 is an anode electrode of a fuel battery and includes an electrode catalyst layer (a first electrode catalyst layer 12) and a gas diffusion layer (a first gas diffusion layer 13). A first surface of the first electrode catalyst layer 12 is disposed on the first main surface of the polymer electrolyte membrane 9 and a first surface of the first gas diffusion layer 13 is disposed on a second surface of the first electrode catalyst layer 12.

The air electrode 11 is a cathode electrode of the fuel battery and includes an electrode catalyst layer (a second electrode catalyst layer 14) and a gas diffusion layer (a second gas diffusion layer 15). A first surface of the second electrode catalyst layer 14 is disposed on the second main surface of the polymer electrolyte membrane 9 and a first surface of the second gas diffusion layer 15 is disposed on a second surface of the second electrode catalyst layer 14.

Each of the gas diffusion layers 13 and 15 is a layer combining a current collecting action and gas permeability. Each of the gas diffusion layers 13 and 15 is, for example, a material excelling in conductivity and gas and liquid permeability, and examples thereof include porous materials such as carbon paper, carbon fiber cloth, and carbon fiber felt.

A water repellent layer may be disposed between the first gas diffusion layer 13 and the first electrode catalyst layer 12 and between the second gas diffusion layer 15 and the second electrode catalyst layer 14. The water repellent layer is a layer for enhancing the liquid permeability (drainage properties). The water repellent layer is formed of, for example, a conductive material such as carbon black and a water repellent resin such as polytetrafluoroethylene (PTFE) as a main component.

Each of the electrode catalyst layers 12 and 14 is a layer accelerating the rate of a power generation reaction of the electrodes. The first electrode catalyst layer 12 may include the electrode catalyst layer 5 and may have the same structure as a commonly used existing electrode catalyst layer in the membrane-electrode assembly 8 of a fuel battery. Because the second electrode catalyst layer 14 is constituted by the electrode catalyst layer 5, the deterioration of the catalyst activity of the membrane-electrode assembly 8 can be reduced.

### (Fourth Embodiment)

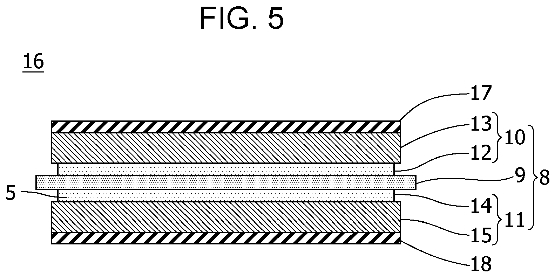

As illustrated in Fig. 5, a fuel battery 16 according to a fourth embodiment includes the membrane-electrode assembly 8 according to the third embodiment. In Fig. 5, the fuel battery 16 is constituted by a single cell having one cell, but may be constituted by a stack of a plurality of cells, the cells being layered.

The membrane-electrode assembly 8 is interposed between a pair of separators 17 and 18. Of the pair of the separators 17 and 18, a first separator 17 is disposed on the fuel electrode 10 and has a surface facing a second surface of the first gas diffusion layer 13 (a surface of the first gas diffusion layer 13 facing away from the first electrode catalyst layer 12 side). This surface includes a supply channel for supplying fuel gas such as hydrogen to the fuel electrode 10. A second separator 18 is disposed on the air electrode 11 and has a surface facing a second surface of the second gas diffusion layer 15 (a surface of the gas diffusion layer 15 facing away from the second electrode catalyst layer 14 side). This surface includes a supply channel for supplying oxidant gas such as air to the air electrode 11.

Thus, fuel gas and oxidant gas supplied to the fuel battery 16 are subjected to a power generation reaction in the membrane-electrode assembly 8. In the membrane-electrode assembly 8, the first electrode catalyst layer 12 thereof includes the electrode catalyst layer 5, and thus the deterioration of the catalyst activity is reduced. Accordingly, the deterioration of the catalyst activity of the fuel battery 16 is reduced, and thus the fuel battery 16 is capable of preventing or reducing the deterioration of the power generation efficiency.

### (Examples)

### <Formation of Electrode Catalysts>

Commercially available mesoporous carbon having a design pore size of 10 nm (CNovel, manufactured by Toyo Tanso Co., Ltd.) was used as a mesoporous material. This mesoporous carbon was placed into a mixed solvent containing equal amounts of water and ethanol to thereby adjust a slurry having a solid concentration of 1 wt%. Pulverization treatment was thereafter performed on the mesoporous carbon. Here, zirconia beads having a diameter of 0.5 mm were placed into the slurry, and the pulverization treatment was performed using a medium stirring wet bead mill (LABSTAR Mini, manufactured by Ashizawa Finetech Ltd.) under the condition of a circumferential speed of 12 m/s for 20 minutes. The zirconia beads were recovered from the slurry subjected to the pulverization treatment and the solvent was vaporized, and thereafter the aggregate obtained was ground using a mortar to thereby form a carbon carrier.

A total of 1 g of the carbon carrier obtained was placed into 400 mL of a mixed solvent of water and ethanol in a ratio (weight ratio) of 3:1, and thereafter ultrasonic dispersion was performed for 15 minutes. After dispersion, under stirring in a nitrogen atmosphere, a 14 wt% dinitrodiamine platinum nitric acid solution was added dropwise thereto such that platinum would be 50 wt% with respect to the carbon carrier, and heat stirring was performed at 80°C for 6 hours. After cooling, filtration washing was performed, and thereafter drying was performed at 80°C for 15 hours. The aggregate obtained was ground using a mortar, and heat treatment was performed in an atmosphere of nitrogen: hydrogen = 85:15 at 220°C for 2 hours to thereby form an electrode catalyst of Example 1.

In the case of an electrode catalyst of Example 2, the average particle diameter of the mesoporous carbon was adjusted by dry pulverization treatment. Other than this, the same method as with the electrode catalyst of Example 1 was performed to form the electrode catalyst of Example 2.

Furthermore, other than the conditions for the pulverization treatment performed on the mesoporous carbon, the same method as with the electrode catalyst of Example 1 was performed to form electrode catalysts of Comparative Examples 1 and 2. That is, in Example 1, the pulverization treatment was performed using zirconia beads having a diameter of 0.5 mm under the condition of a circumferential speed of 12 m/s for 20 minutes. On the other hand, in the case of the electrode catalyst of Comparative Example 1, the pulverization treatment was performed using zirconia beads having a diameter of 0.3 mm under the condition of a circumferential speed of 12 m/s for 60 minutes. In the case of the electrode catalyst of Comparative Example 2, the pulverization treatment was performed using zirconia beads having a diameter of 0.5 mm under the condition of a circumferential speed of 12 m/s for 60 minutes.

### <Pore Surface Area Ratio of Mesoporous Carbon>

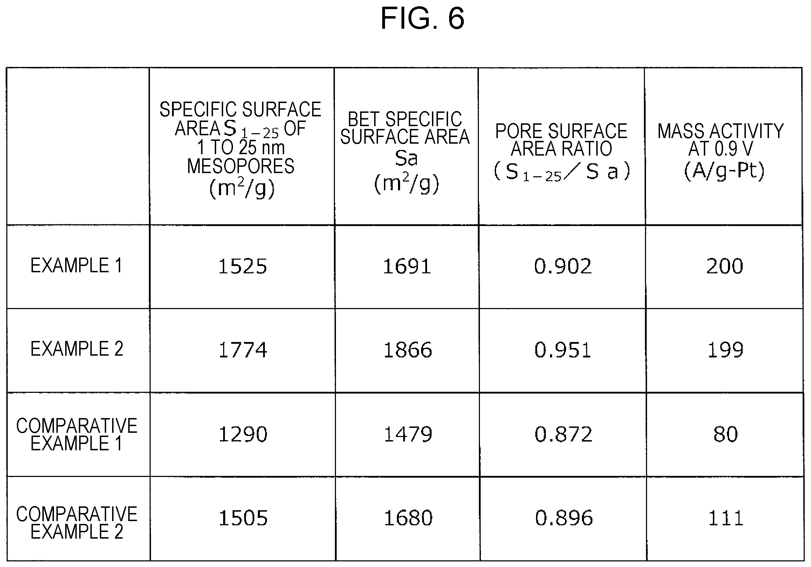

As illustrated in Fig. 6, with respect to the electrode catalysts of Examples 1 and 2 and Comparative Examples 1 and 2, the specific surface area S₁₋₂₅ (m²/g) of mesopores of the mesoporous carbon and the BET specific surface area Sa (m²/g) and the pore surface area ratio (S₁₋₂₅/Sa) of the mesoporous carbon, before the mesoporous carbon supported a catalyst metal, were obtained. The BET specific surface area Sa was determined by evaluating the mesoporous carbon according to a BET method. The pore surface area ratio (S₁₋₂₅/Sa) was obtained by dividing the specific surface area S₁₋₂₅ (m²/g) of the mesopores 4 by the BET specific surface area Sa (m²/g) of the mesoporous carbon.

The specific surface area S₁₋₂₅ and the mode radius of the mesopores of the mesoporous carbon, before the mesoporous carbon supported the catalyst metal, were determined from an adsorption isotherm of nitrogen gas at a liquid nitrogen temperature. Specifically, using a physical adsorption apparatus (Autosorb-iQ2, manufactured by Anton Paar GmbH), the nitrogen adsorption isotherm of the mesoporous carbon was measured, and using an analysis software accompanying the apparatus, the cumulative pore size distribution (S vs D) and the log differential pore size distribution (dS/d(logD) vs D) were calculated according to a BJH method. The specific surface area S₁₋₂₅ of the mesopores of the mesoporous carbon was calculated from the numerical data of the cumulative pore size distribution. Furthermore, the peak maximum value of the log differential pore size distribution was determined as the mode radius of the mesoporous carbon.

### <Evaluation of Catalyst Activity of Electrode Catalysts>

As described above, the electrode catalysts of Examples 1 and 2 and Comparative Examples 1 and 2 were each obtained. Each electrode catalyst and Ketjen black (EC300J, manufactured by Lion Specialty Chemicals Co., Ltd) having half the weight of the mesoporous carbon contained in each electrode catalyst were placed into a mixed solvent containing equal amounts of water and ethanol, and stirring was performed. Into the slurry obtained, an ionomer (Nafion, manufactured by Dupont, Inc.) was placed such that the weight ratio of the ionomer to the total carbon (mesoporous carbon + Ketjen black) would be 0.8, and ultrasonic dispersion treatment was performed. The catalyst ink thus obtained was applied to a first main surface of a polymer electrolyte membrane (GORE-SELECT III, manufactured by W. L. Gore and Associates G. K.) according to a spray method to thereby form a second electrode catalyst layer.

Furthermore, a commercially available platinum-supporting carbon black catalyst (TEC10E50E, manufactured by TANAKA Kikinzoku Kogyo K. K.) was placed into a mixed solvent containing equal amounts of water and ethanol, and stirring was performed. Into the slurry obtained, an ionomer (Nafion, manufactured by Dupont, Inc.) was placed such that the weight ratio of the ionomer to the carbon would be 0.8, and ultrasonic dispersion treatment was performed to thereby obtain a catalyst ink. This catalyst ink was applied to a second main surface of the polymer electrolyte membrane (a surface facing away from the second electrode catalyst layer side) according to a spray method to thereby form a first electrode catalyst layer.

Subsequently, a first gas diffusion layer (GDL25BC, manufactured by SGL Carbon Japan Co., Ltd.) was disposed on the first electrode catalyst layer, and a second gas diffusion layer (GDL25BC, manufactured by SGL Carbon Japan Co., Ltd.) was disposed on the second electrode catalyst layer. To the structure obtained, a pressure of 7 kgf/cm² was applied at a high temperature of 140°C for 5 minutes to thereby form a membrane-electrode assembly.

The membrane-electrode assembly obtained was interposed between separators each including a flow channel having a serpentine shape. This interposed structure was fitted into a predetermined jig to thereby form a fuel battery of a single cell.

The temperature of the fuel battery obtained was kept at 80°C, and hydrogen having a dew point of 80°C was supplied to a fuel electrode and oxygen having a dew point of 80°C was supplied to an air electrode. Here, the hydrogen and the oxygen were each supplied at a flow rate sufficiently larger than the amount to be consumed by an electrochemical reaction (oxidation-reduction reaction) of the fuel battery.

Here, using an electronic load apparatus (PLZ-664WA, manufactured by Kikusui Electronics Corporation) each voltage of the fuel battery was measured during constant current operation. During this measurement, using a low-resistance meter having a fixed frequency of 1 kHz, the electrical resistance of the fuel battery was measured in-situ. From the current-voltage curve corrected using an electrical resistance component of the fuel battery, a current value at 0.9 V was read and was thereafter normalized by the platinum amount contained in the electrode catalyst layer of the air electrode to thereby obtain the index of the catalyst activity. This is called a mass activity at 0.9 V (A/g-Pt) and is commonly used as an index indicating the catalyst activity of a fuel battery.

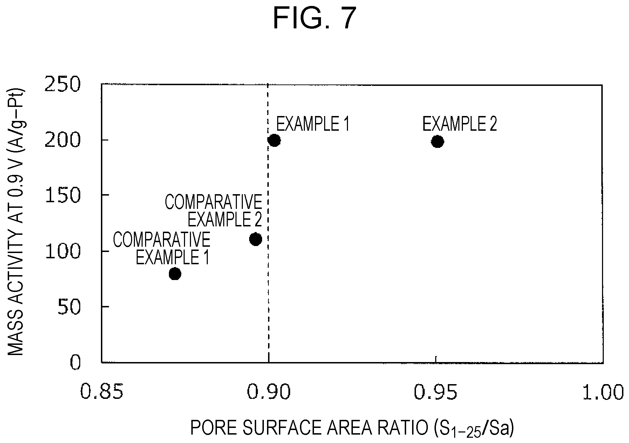

The table of Fig. 6 and the graph of Fig. 7 illustrate the relationship between the pore surface area ratio (S₁₋₂₅/Sa) of the mesoporous carbon and the mass activity at 0.9 V (A/g-Pt) of the fuel batteries in the cases of the fuel batteries including the electrode catalysts of Examples 1 and 2 and Comparative Examples 1 and 2. As presented, it is revealed that the fuel batteries including the electrode catalysts of Examples 1 and 2 have a higher mass activity at 0.9 V than the fuel batteries including the electrode catalysts of Comparative Examples 1 and 2. That is, in the cases of the mesoporous carbon having a pore surface area ratio of greater than 0.90 before supporting the catalyst metal particles, the decrease in the specific surface area of the catalyst metal particles due to the ionomer is reduced to a greater extent and the catalyst activity of the fuel batteries is higher than in the cases of the mesoporous carbon having a pore surface area ratio of less than or equal to 0.90 before supporting the catalyst metal particles.

Thus, all the embodiments described above may be combined with one another as long as they do not exclude one another. For example, Modification 2 is applicable to Modification 1. Furthermore, Modification 3 is applicable to Modifications 1 and 2 and a combination of these.

From the description above, many improvements and other embodiments of the present disclosure are apparent to those skilled in the art. Thus, it is to be interpreted that the above description is provided merely as an example to explain the best mode of practicing the present disclosure to those skilled in the art. Without departing from the spirit of the present disclosure, the details of the structure and/or the function thereof can be substantially changed.

### Industrial Applicability

The electrode catalyst for a fuel battery, the electrode catalyst layer of a fuel battery, the membrane-electrode assembly, and the fuel battery according to the present disclosure are useful as, for example, an electrode catalyst for a fuel battery, an electrode catalyst layer of a fuel battery, a membrane-electrode assembly, and a fuel battery that are capable of reducing the deterioration of the catalyst activity to a greater extent than in the related art.

### Reference Signs List

- 1: electrode catalyst
- 2: mesoporous material
- 3: catalyst metal particle
- 4: mesopore
- 5: electrode catalyst layer
- 6: ionomer
- 7: carbon material (carbon black, carbon nanotubes)
- 8: electrode assembly
- 9: polymer electrolyte membrane
- 10: fuel electrode
- 11: air electrode
- 12: first electrode catalyst layer (electrode catalyst layer)
- 13: first gas diffusion layer (gas diffusion layer)
- 14: second electrode catalyst layer (electrode catalyst layer)
- 15: second gas diffusion layer (gas diffusion layer)
- 16: fuel battery
- 17: separator
- 18: separator

## Claims

1. An electrode catalyst for a fuel battery, comprising:
a mesoporous material; and
catalyst metal particles supported at least in the mesoporous material,
wherein, before supporting the catalyst metal particles,
the mesoporous material has mesopores having a mode radius of greater than or equal to 1 nm and less than or equal to 25 nm and has a value of greater than 0.90;
the mode radius of the mesopores being determined by measuring the nitrogen adsorption isotherm using a physical adsorption apparatus, calculating the log differential pore size distribution according to a BJH method, and determining the peak maximum value of the log differential pore size distribution as the mode radius; and
the value being determined by dividing a specific surface area S₁₋₂₅ (m²/g) of the mesopores obtained by analyzing a nitrogen adsorption-desorption isotherm according to a BJH method, the mesopores having a radius of greater than or equal to 1 nm and less than or equal to 25 nm, by a BET specific surface area (m²/g) evaluated according to a BET method.

2. The electrode catalyst for a fuel battery according to Claim 1, wherein the mesopores of the mesoporous material have a mode radius of greater than 1.65 nm.

3. The electrode catalyst for a fuel battery according to Claim 1 or 2, wherein the BET specific surface area of the mesoporous material is greater than or equal to 1500 (m²/g).

4. The electrode catalyst for a fuel battery according to any one of Claims 1 to 3, wherein the ratio of the number of catalyst metal particles supported in the mesopores to the total number of the catalyst metal particles supported in the mesoporous material is greater than or equal to 0.90.

5. An electrode catalyst layer of a fuel battery comprising at least the electrode catalyst for a fuel battery according to any one of Claims 1 to 4 and at least an ionomer.

6. The electrode catalyst layer of a fuel battery according to Claim 5, comprising at least one of carbon black or carbon nanotubes.

7. A membrane-electrode assembly comprising:
a polymer electrolyte membrane; and
a fuel electrode and an air electrode respectively disposed on both main surfaces of the polymer electrolyte membrane, the fuel electrode and the air electrode each including an electrode catalyst layer and a gas diffusion layer,
wherein at least the electrode catalyst layer of the air electrode includes the electrode catalyst layer of a fuel battery according to Claim 5 or 6.

8. A fuel battery comprising the membrane-electrode assembly according to Claim 7.

## Patentansprüche

1. Ein Elektrodenkatalysator für eine Brennstoffbatterie, umfassend:
ein mesoporöses Material; und
Katalysatormetallpartikel, die zumindest in dem mesoporösen Material getragen werden,
wobei das mesoporöse Material vor dem Tragen der Katalysatormetallpartikel Mesoporen mit einem Modalradius von größer oder gleich 1 nm und kleiner oder gleich 25 nm aufweist und einen Wert von größer als 0,90 hat;
wobei der Modalradius der Mesoporen durch Messen der Stickstoffadsorptionsisotherme unter Verwendung einer physikalischen Adsorptionsvorrichtung, Berechnen der logarithmischen differenziellen Porengrößenverteilung gemäß einer BJH-Methode und Bestimmen des Spitzenmaximumwerts der logarithmischen differenziellen Porengrößenverteilung als Modalradius bestimmt wird; und
der Wert bestimmt wird, indem eine spezifische Oberfläche S₁₋₂₅ (m²/g) der Mesoporen, die durch Analyse einer Stickstoff-Adsorptions-Desorptionsisotherme gemäß einer BJH-Methode erhalten wurde, wobei die Mesoporen einen Radius von größer oder gleich 1 nm und kleiner oder gleich 25 nm aufweisen, durch eine BET-spezifische Oberfläche (m²/g), die gemäß einer BET-Methode ermittelt wurde, geteilt wird.

2. Der Elektrodenkatalysator für eine Brennstoffbatterie gemäß Anspruch 1, wobei die Mesoporen des mesoporösen Materials einen Modalradius von größer als 1,65 nm aufweisen.

3. Der Elektrodenkatalysator für eine Brennstoffbatterie gemäß Anspruch 1 oder 2, wobei die BET-spezifische Oberfläche des mesoporösen Materials größer oder gleich 1500 (m²/g) ist.

4. Der Elektrodenkatalysator für eine Brennstoffbatterie gemäß einem der Ansprüche 1 bis 3, wobei das Verhältnis der Anzahl der in den Mesoporen getragenen Katalysatormetallpartikel zur Gesamtzahl der im mesoporösen Material getragenen Katalysatormetallpartikel größer oder gleich 0,90 ist.

5. Eine Elektrodenkatalysatorschicht einer Brennstoffbatterie, die mindestens den Elektrodenkatalysator für eine Brennstoffbatterie gemäß einem der Ansprüche 1 bis 4 und mindestens ein lonomer umfasst.

6. Die Elektrodenkatalysatorschicht einer Brennstoffbatterie gemäß Anspruch 5, die mindestens eines von Ruß oder Kohlenstoffnanoröhren umfasst.

7. Eine Membran-Elektroden-Anordnung, die Folgendes umfasst:
eine Polymerelektrolytmembran; und
eine Brennstoffelektrode und eine Luftelektrode, die jeweils auf beiden Hauptoberflächen der Polymerelektrolytmembran angeordnet sind, wobei die Brennstoffelektrode und die Luftelektrode jeweils eine Elektrodenkatalysatorschicht und eine Gasdiffusionsschicht umfassen,
wobei zumindest die Elektrodenkatalysatorschicht der Luftelektrode die Elektrodenkatalysatorschicht einer Brennstoffbatterie gemäß Anspruch 5 oder 6 umfasst.

8. Eine Brennstoffbatterie, die die Membran-Elektroden-Anordnung gemäß Anspruch 7 umfasst.

## Revendications

1. Catalyseur d'électrode pour une batterie à combustible, comprenant :
un matériau mésoporeux ; et
des particules métalliques de catalyseur supportées au moins dans le matériau mésoporeux,
dans lequel, avant le support des particules métalliques de catalyseur,
le matériau mésoporeux présente des mésopores dont le rayon de mode est supérieur ou égal à 1 nm et inférieur ou égal à 25 nm, et présente une valeur supérieure à 0,90 ;
le rayon de mode des mésopores étant déterminé en mesurant l'isotherme d'adsorption d'azote en utilisant un appareil d'adsorption physique, en calculant la distribution différentielle logarithmique de la taille des pores selon la méthode **BJH, et** en déterminant la valeur maximale de pic de la distribution différentielle logarithmique de la taille des pores comme étant le rayon de mode ; et
la valeur étant déterminée en divisant la surface spécifique S₁₋₂₅ (m²/g) des mésopores obtenue par analyse d'un isotherme d'adsorption-désorption d'azote selon la méthode **BJH,** les mésopores ayant un rayon supérieur ou égal à 1 nm et inférieur ou égal à 25 nm, par la surface spécifique **BET** (m²/g) évaluée selon la méthode **BET.**

2. Catalyseur d'électrode pour une batterie à combustible selon la revendication 1, dans lequel les mésopores du matériau mésoporeux ont un rayon de mode supérieur à 1,65 nm.

3. Catalyseur d'électrode pour une batterie à combustible selon la revendication 1 ou 2, dans lequel la surface spécifique **BET** du matériau mésoporeux est supérieure ou égale à 1500 (m²/g).

4. Catalyseur d'électrode pour une batterie à combustible selon l'une quelconque des revendications 1 à 3, dans lequel le rapport entre le nombre de particules métalliques de catalyseur supportées dans les mésopores et le nombre total de particules métalliques de catalyseur supportées dans le matériau mésoporeux est supérieur ou égal à 0,90.

5. Couche de catalyseur d'électrode pour une batterie à combustible comprenant au moins le catalyseur d'électrode pour une batterie à combustible selon l'une quelconque des revendications 1 à 4 et au moins un ionomère.

6. Couche de catalyseur d'électrode pour une batterie à combustible selon la revendication 5, comprenant au moins du noir de carbone ou des nanotubes de carbone.

7. Ensemble membrane-électrode comprenant :
une membrane électrolytique polymère ; et
une électrode à combustible et une électrode à air disposées respectivement sur les deux surfaces principales de la membrane électrolytique polymère, l'électrode à combustible et l'électrode à air comprenant chacune une couche de catalyseur d'électrode et une couche de diffusion gazeuse,
dans lequel au moins la couche de catalyseur d'électrode de l'électrode à air comprend la couche de catalyseur d'électrode d'une batterie à combustible selon la revendication 5 ou 6.

8. Batterie à combustible comprenant l'ensemble membrane-électrode selon la revendication 7.
